Europäisches Patentamt

**European Patent Office**

Office européen des brevets

(19)

(11) Numéro de publication: **0 245 171 B1**

(12)

# FASCICULE DE BREVET EUROPEEN

(45) Date de publication du fascicule du brevet: 08.08.90

(51) Int. Cl.⁵: **A47J 36/28,** F25D 5/02

(21) Numéro de dépôt: **87401019.2**

(22) Date de dépôt: **04.05.87**

(54) **Conditionnement à transfert de chaleur unique pour boissons, aliments et médicaments.**

(30) Priorité: **05.05.86 FR 8606464**

(43) Date de publication de la demande:
**11.11.87 Bulletin 87/46**

(45) Mention de la délivrance du brevet:
**08.08.90 Bulletin 90/32**

(84) Etats contractants désignés:
**AT BE CH DE ES GB IT LI LU NL SE**

(56) Documents cités:
**DE-C- 111 792**
**FR-A- 513 015**
**FR-A- 1 239 091**
**FR-A- 2 155 906**
**FR-A- 2 165 215**
**FR-A- 2 231 342**
**GB-A- 1 329 122**
**GB-A- 2 131 542**
**US-A- 2 220 777**
**US-A- 2 541 736**
**US-A- 3 213 932**

(73) Titulaire: **Labrousse, Bernard, Louis, Pierre, Emile,**
**Avenue de Paris, F-19270 Donzenac(FR)**

(72) Inventeur: **Labrousse, Bernard, Louis, Pierre, Emile,**
**Avenue de Paris, F-19270 Donzenac(FR)**

(74) Mandataire: **Cabinet Pierre HERRBURGER,**
**115, Boulevard Haussmann, F-75008 Paris(FR)**

## Description

L'invention concerne un conditionnement à transfert de chaleur à usage unique pour boissons et aliments, présentant la forme générale d'un récipient incassable, susceptible de chauffer ou refroidir sans danger un aliment ou une boisson, cette boisson pouvant être elle-même une préparation extemporanée à partir d'un solvant et d'un soluté.

La présente invention a pour but de créer un conditionnement à transfert de chaleur à usage unique pour boissons et aliments de conception extrêmement simple et d'une réalisation fiable susceptible de s'adapter aux différents besoins de l'utilisateur et des produits à conditionner.

La présente invention a également pour but d'être d'une manipulation et d'un fonctionnement adaptés à la réaction chimique déclenchée à partir de la capsule par déformation d'une de ses parties ou de ses parois déformables.

La présente invention a pour but de créer un conditionnement à transfert de chaleur adapté au déclenchement de la réaction chimique, à la libération du soluté de la boisson, ainsi qu'à la distribution de l'aliment ou de la boisson.

Enfin, la présente invention a pour but de créer un conditionnement à transfert de chaleur dont la fiabilité est complétée également par un indicateur de température destiné à signaler le dépassement des conditions normales prévues d'utilisation.

Conformément au brevet GB-A 1 329 122, on connaît un conditionnement à transfert de chaleur à usage unique pour produits alimentaires comportant:

- un récipient fermé ayant une paroi supérieure, un fond et une paroi latérale, l'une de ces parois pouvant être déformée par pression ou par traction,
- un produit alimentaire placé dans le récipient,
- une capsule fermée chauffante disposée à l'intérieur du récipient et au moins partiellement immergée dans le produit alimentaire, conditionnement dans lequel:
- la partie interne de la capsule fermée contient un séparateur qui la subdivise en deux compartiments étanches contenant des réactifs chimiques différents qui, lorsqu'ils sont mélangés, produisent à l'intérieur de la capsule une réaction chimique exothermique qui a pour effet de modifier sa température et celle du produit alimentaire dans lequel elle et immergée sans ouvrir cette capsule,
- la capsule présente une paroi déformable par pression ou par traction située à une certaine distance de la paroi déformable du récipient avec laquelle elle est susceptible de coopérer de façon telle que la déformation de la paroi par pression ou par traction entraîne la déformation de la paroi.

L'invention a pour objet de proposer un conditionnement à transfert de chaleur à usage unique amélioré de ce type dans lequel la réaction chimique peut être exothermique ou endothermique et la déformation de la paroi déformable de la capsule peut s'effectuer par pression ou par traction.

Conformément à ce conditionnement le séparateur coopère avec la paroi déformable de la capsule par l'intermédiaire d'un moyen d'accouplement de façon telle qu'une déformation de la paroi entraîne une translation du séparateur à l'intérieur de la capsule, le séparateur étant pourvu d'au moins un orifice normalement fermé susceptible de s'ouvrir sous l'effet de la translation du séparateur, celui-ci provoquant au cours de sa translation l'injecition à travers l'orifice de l'un des réactifs chimiques provenant de l'un des compartiments dans l'autre compartiment cette mise en contact des deux réactifs chimiques déclenchant la réaction chimique.

Suivant une autre caractéristique de l'invention s'appliquant plus particulièrement à un conditionnement à transfert de chaleur dans lequel le produit alimentaire est une boisson à préparation extemporanée par combinaison d'un solvant et d'un soluté, la partie interne du récipient est subdivisée en deux zones situées à l'extérieur de la capsule et dont l'une contient le solvant et l'autre le soluté des moyens situés à l'intérieur du récipient étant sensibles à une déformation de la paroi déformable de celui-ci pour entraîner en réponse le mélange du solvant et du soluté.

Suivant une autre caractéristique de l'invention, le séparateur est constitué par un disque portant le ou les orifices et séparant les deux compartiments de la capsule dont au moins l'un contient un réacitf chimique liquide; le moyen d'accouplement du disque et de la paroi déformable de la capsule, situé à l'intérieur de cette dernière étant sensible à une déformation de cette paroi pour entraîner en réponse un déplacement du disque dans le compartiment contenant le réactif chimique liquide et l'injection à force d'un flux de ce réactif dans l'autre compartiment à travers le ou les orifices.

Suivant une autre caractéristique de l'invention, le conditionnement à transfert de chaleur comporte des organes de maintien de la capsule thermique à l'intérieur du récipient fermé à une certaine distance des parois de celui-ci, une partie du produit alimentaire placé dans le récipient se trouvant entre les parois déformables de celui-ci et de la capsule.

Suivant une autre caractéristique de l'invention, la capsule thermique est totalement immergée à l'intérieur du produit alimentaire.

Suivant une autre caractéristique de l'invention, la paroi déformable du récipient est son fond et en ce que la paroi supérieure du récipient est pourvue d'un organe de distribution du produit alimentaire.

Suivant une autre caractéristique de l'invention, le conditionnement à transfert de chaleur comporte une tige permettant l'accouplement de la paroi déformable de la capsule thermique et de la paroi déformable du récipient, cette tige étant située entre ces parois à l'intérieur du récipient et étant reliée à un organe de préhension permettant d'exercer un mouvement de traction.

Suivant une autre caractéristique de l'invention, le réactif liquide est contenu dans une poche reposant sur le disque séparateur non étanche.

Suivant une autre caractéristique de l'invention, le récipient est pourvu d'un poussoir coopérant avec une came pour déformer la capsule et ouvrir le réservoir.

La présente invention sera mieux comprise à l'aide d'un mode de réalisation du conditionnement à transfert de chaleur conforme à l'invention, représenté schématiquement, à titre d'exemple non limitatif sur les dessins ci-joints, dans lesquels:

– la figure 1 est une vue en coupe de côté d'un premier mode de réalisation du conditionnement à transfert de chaleur.

– la figure 2 est une vue de-dessus du conditionnement à transfert de chaleur conformé à la figure 1 précédente.

– la figure 3 est une vue de-dessous du conditionnement conforme à la figure 1 précédente.

– la figure 4 est une vue en coupe de côté d'un second mode de réalisation du conditionnement à transfert de chaleur.

– la figure 5 est une vue en coupe de côté d'un troisième mode de réalisation du conditionnement à transfert de chaleur.

– la figure 6 est une vue en coupe de côté d'un quatrième mode de réalisation du conditionnement à transfert de chaleur,

– la figure 7 est une vue de côté d'un cinquième mode de réalisation du conditionnement à transfert de chaleur.

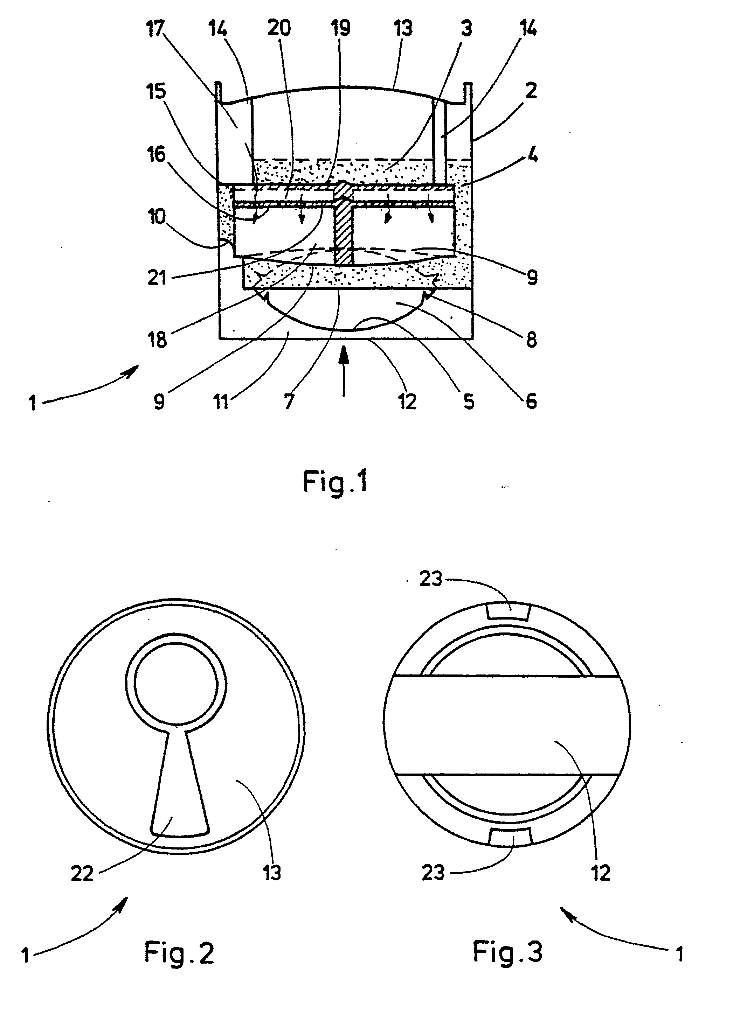

Selon la figure 1, le conditionnement à transfert de chaleur 1 est constitué d'un récipient 2 contenant la boisson, l'aliment ou le solvant 3. Le récipient 2 comporte également une chambre à réaction 4 au moins partiellement immergée. Dans ce mode de réalisation particulier, le récipient comporte une boisson à préparation extemporanée. La partie inférieure du récipient comporte un fond bombé 5 déformable par pression et définissant un réservoir 6 pour le soluté. Le réservoir 6 est obturé par une cloison étanche 7 ouvrable ou perforable.

Après application extérieure d'une pression sur le fond déformable 5 du récipient, le réservoir 6 est ouvert par un poussoir ou un perforateur constitué par exemple par une couronne de picot 8. Une seconde pression sur le fond déformé 5 permet de déformer la capsule 4 suivant le trait en tiretés 9. Le pourtour du réservoir 5 est pourvu d'épaulements 10. Ces épaulements peuvent être vissants ou remplacés par des clips, des vis ou des arceaux, un filet, une carcasse, des crochets maintenant la capsule, si celle-ci est autonome ou non solidaire de l'enceinte.

Ce type de réservoir à ouverture mécanique peut être remplacé par un réservoir fusible incorporé au récipient, et s'ouvrant automatiquement en cours de chauffage grâce à la chaleur dégagée par le partie chauffante.

Dans le cas d'un aliment préalablement préparé, le fond du récipient 2 ne comporte pas de réservoir pour le soluté. Conformément à ce mode de réalisation particulier, le fond du récipient 2 est déformable et peut être pourvu d'un poussoir destiné à faciliter la déformation du fond en tiretés 9 de la capsule 4. De plus, le fond de la partie chauffante ou réfrigérante 4 peut être assimilé au fond du récipient 2; chambre 4 et récipient 2 étant en une seule pièce.

Il est possible également d'exercer une pression par l'intermédiaire d'une vis ou d'une clé pour déformer la capsule 4.

Il est possible également de prévoir une enveloppe extérieure autour du récipient 2. Cette enveloppe est une enveloppe isolante doublant extérieurement les parois du récipient 2.

A sa base, le récipient 2 est pourvu d'un socle 11 sur lequel peut être fixé au double fond 12 partiel ou total empêchant toute déformation accidentelle.

La paroi supérieure 13 peut être découpée sur sa périphérie par un dispositif adéquat ou enlevée en totalité par décollement. Il est possible également du prévoir un opercule dans cette paroi 13.

Ces éléments sont destinés à assurer la distribution de l'aliment ou de la boisson. Dans le cas d'une capsule distincte, il est possible également de prévoir en complément ou substitution le maintien et la fixation de la capsule 4 directement par l'intermédiaire de la paroi 13 faisant office de couvercle ou du récipient 2. Ainsi des éléments peuvent être mis en œuvre pour maintenir la capsule 4 tels le ou les piliers 14. Le système pilier peut être remplacé par des clips, des crochets, des arceaux, des épaulements, une vis. Tous ces organes peuvent être indépendants et interposables entre le récipient 2 et la chambre de réaction 4.

La capsule chauffante ou réfrigérante 4 permet de produire le froid ou la chaleur par réaction chimique exothermique ou endothermique. Elle est partiellement ou totalement immergée dans la boisson ou l'aliment à chauffer ou à refroidir. La capsule 4 est constituée d'une enceinte 15 et un séparateur 16 définissant un compartiment 17 pour le réactif chimique liquide et un compartiment 18 pour le réactif chimique solide.

L'enceinte 15 présente une face déformable 9. Par application d'une pression, on déclenche la réaction chimique en mettant en présence les réactifs liquides et solides. La déformation exercée sur la paroi 9 provoque le déplacement du séparateur 16 de la capsule.

Il est possible de prévoir un épaulement sur la face interne de l'enceinte 15, des bossages ou un nervurage horizontale ou hélicoïdal, ou encore des cannelures.

Il est possible également d'augmenter la surface d'échange en prévoyant des bosselages sur l'enceinte. La face non déformable 19 de l'enceinte peut être pourvue d'ondulations ou de saillies. Le séparateur 16 assure la mise en contact des réactifs chimiques solides et liquides par déplacement.

Le séparateur 16 peut être un séparateur à bouchon ou à perforateur. Ceci n'est pas le cas dans cette figure particulière. La cloison séparatrice 20 du séparateur 16 est percée d'au moins un orifice. Elle est complétée par un bouchon extractible. Il est possible également de prévoir une cloison séparatrice 20 perforable élastique et rétractile et complétée par un perforateur.

Suivant le mode de réalisation particulier représenté dans cette figure, le séparateur 16 est un séparateur agissant par injection. Ainsi le fond 9 déformé de la capsule 4 provoque le déplacement d'un disque ou d'un capuchon entraînant l'injection régulière du réactif liquide dans le réactif solide. L'élasticité du fond 9 procurant à l'injection une valeur constante car indépendante de la pression ou de la traction exercée. L'injection est favorisée par la présence d'orifices 21 situés dans le disque. L'étanchéité est alors assurée par une cloison ou une membrane, soit par des clapets ou encore par la mise en place d'un enduit ou d'un film superficiel. Les orifices 21 peuvent également avoir la forme d'avant-trous de micro-orifices ou être complétés de fiches d'obturation ou associés à des tubes perforateurs.

Le disque constituant le séparateur 16 est susceptible de présenter des picots sur sa surface et des cannelures sur sa périphérie. Dans un autre mode de réalisation, le séparateur 16 peut être déformable passant lors de son déplacement d'une forme concave avec orifices obturés à une forme convexe avec orifices béants.

Le séparateur 16 peut également être constitué d'un disque ou capuchon mobile percé ou non. Des orifices de dispersion ou le complément obturateur sont alors situés dans un cadre, un deuxième disque ou une cloison fixe, placé d'un côté ou de l'autre du disque mobile qui peut être prévu pour tourner autour de son axe lors de son déplacement. Il est possible également de prévoir une poche reposant sur le disque contenant le réactif liquide.

Selon la figure 2, le conditionnement 1 en vue de-dessus comporte sur sa paroi 13 un distributeur 22.

Selon la figure 3, le conditionnement 1 vu de-dessous comporte sur sa surface de fond, un double fond 12 ainsi que des épaulements 23.

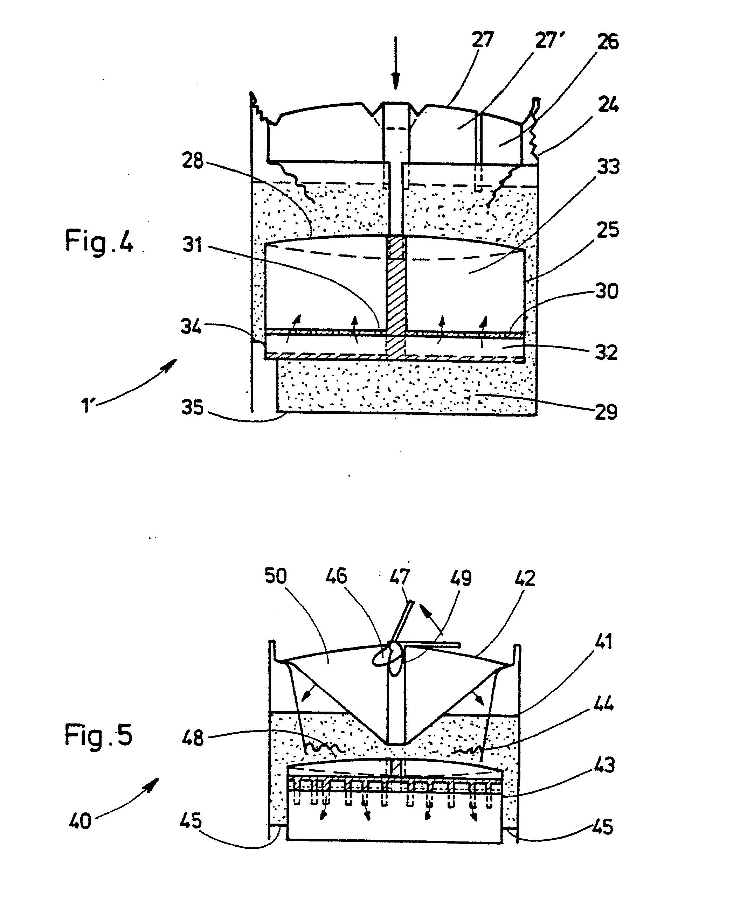

Selon la figure 4, le conditionnement 1' comporte également un récipient 24 muni d'une capsule thermique 25. Dans ce mode de réalisation particulier, le réservoir 26 à prévoir pour une préparation extemporanée est placé dans la partie supérieure du récipient 24 en-dessous de la paroi supérieure déformable 27 ou entre la partie thermique 25 et la paroi 35.

Ce réservoir est destiné à contenir le soluté ou le solvant, la paroi 27 pouvant présenter un évent.

Ce réservoir à ouverture mécanique peut être remplacé par un réservoir fusible.

Suivant le mode de réalisation particulier, on agit par pression sur la paroi supérieure 27 pour déformer partiellement ou totalement celle-ci jusqu'à arriver en position représentée en tiretés 27'. La pression agit sur la paroi déformable 28 de la capsule thermique 25. Cette dernière est immergée dans la boisson ou l'aliment 29. La capsule thermique 25 est pourvue d'un séparateur 30 pourvu d'orifices 31. Le séparateur 30 partage la capsule thermique en un compartiment 32 recevant le réactif liquide et en un compartiment 33 recevant le réactif solide. La capsule thermique 25 est en outre maintenue en place par un épaulement 34. Si elle est distincte du récipient, c'est-à-dire non en une pièce avec le récipient.

Selon un mode de réalisation voisin, le récipient 24 comporte une partie 24' pliante ou/et coulissante au niveau du réservoir 26, la paroi 27 étant indéformable. L'application d'une pression sur cette paroi permet l'ouverture du réservoir et le déclenchement de la réaction. Cette partie pliante peut être doublée extérieurement d'un anneau de sûreté, amovible pour l'emploi, empêchant tout usage involontaire. Le déclenchement de la réaction peut d'autre part être assuré par l'intermédiaire de la paroi 35. Selon un mode voisin, c'est la paroi 27 qui comporte la partie pliante.

Par pression sur la paroi déformable 27, directement ou à l'aide d'un poussoir ou d'un perforateur, on transmet la déformation sur la capsule 25 à l'aide d'un poussoir, d'une vis ou d'une clé. La distribution contrairement aux modes de réalisation représentés aux figures 1 à 3 précédentes peut être effectuée aussi bien au niveau de la paroi 27 que de la paroi 35 du récipient 24, la paroi de la capsule devenant paroi du récipient. La distribution peut se faire par découpage total ou enlèvement par décollement de l'une ou de l'autre des parois 27 ou 35. Il est également possible de prévoir une protection au niveau du la face déformable 27.

Selon la figure 5, le conditionnement à transfert de chaleur 40 constitue un troisième mode de réalisation. Il est constitué sensiblement comme le conditionnement 1' représenté à la figure 4 précédente. Ainsi, le récipient 41 comprend une face déformable supérieure 42. Une capsule thermique 43 et située dans la partie inférieure du récipient 41 de manière à être immergée dans la boisson ou l'aliment 44. La capsule 43 peut être complétée par un épaulement périphérique 45. Suivant ce mode de réalisation particulier, seule la commande pour déformer la paroi supérieure 42 diffère. Cette commande est constituée par un poussoir 46 muni d'un levier 47 agissant sur la paroi déformable 48 de la capsule thermique 43. La paroi supérieure 42 du récipient 41 peut être déformable ou non. L'action du poussoir 46 s'exerce directement sur la capsule thermique 43.

Le poussoir 46 qui peut être contenu entièrement dans le réservoir 50 coopère avec une came 49. Le levier 47 peut être remplacé par une vis ou une clef.

Pour une préparation extemporanée, le réservoir souple de soluté 50 pincé à l'état fermé peut être placé dans la partie supérieure du récipient 41. Il est possible, cependant, d'imaginer que le réservoir de soluté soit disposé de l'autre côté de la capsule thermique 43.

Un réservoir en poche peut être envisagé, à embouchure déchirable, décollable, dépliable, cette embouchure étant reliée au distributeur ou à une des parties de l'organe de commande ou à la paroi 42, de façon à être ouverte lors de la manipulation.

Ce type de réservoir peut être remplacé par un réservoir fusible, ce qui autorise, de même qu'en l'absence de réservoir, à supprimer la commande à poussoir; le déclenchement de la réaction se faisant par pression directe sur la paroi déformable 48 de la capsule thermique, paroi alors en position inférieure qui peut également dans ce cas être assimilée à la paroi inférieure du récipient 41.

Suivant ce mode de réalisation, la distribution peut être effectuée par un opercule ou un tube extérieur ou un embout disposé soit sur la face supérieure, soit sur la face inférieure du récipient 41.

Il est possible de combiner la distribution avec la commande 46 assurant alors les fonctions de libération de soluté, de déclenchement de réactions chimiques ou de distribution de la boisson. Il est également possible d'envisager un enlèvement ou un décollement, un découpage périphérique total de la paroi supérieure 42.

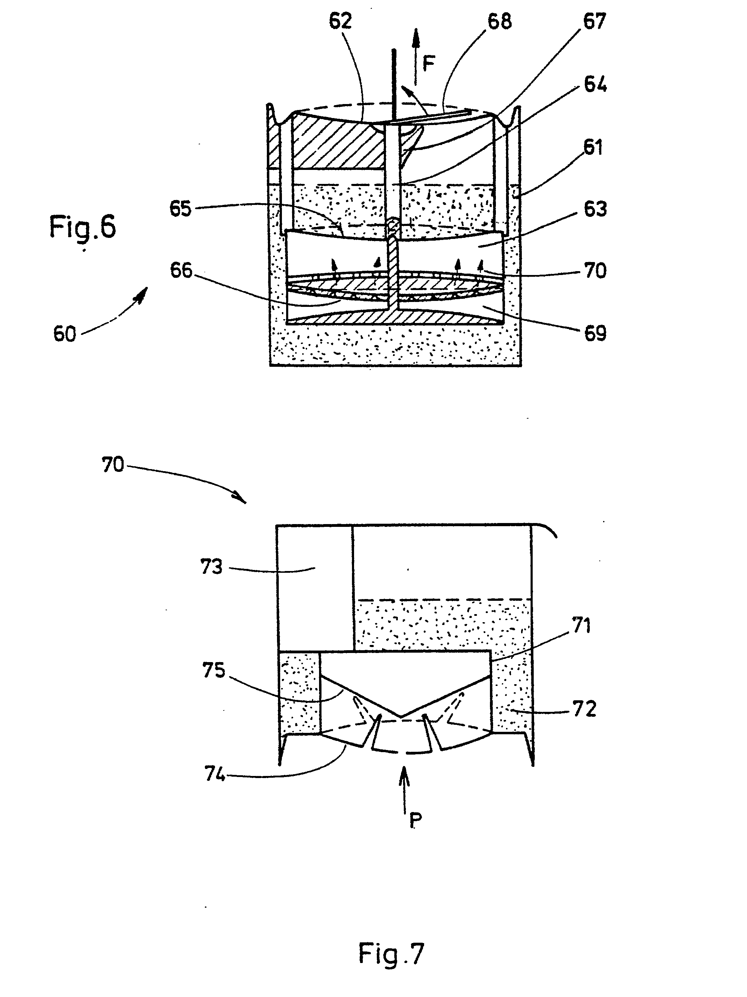

Selon la figure 6, le conditionnement 60, contrairement au mode de réalisation précédemment décrit, est à commande par traction et non pas par pression. Cette traction s'effectue suivant la flèche F. Le conditionnement 60 est pourvu d'un récipient 61 comportant une face supérieure 62 déformable. Le récipient reçoit la capsule thermique 63. La réaction chimique exothermique ou endothermique est obtenue en tirant sur un organe extérieur de préhension 68, porté par le récipient 61. Cet organe est relié à une tige 64 solidaire de la face déformable 65 de la capsule thermique 63. La face 65 est également solidaire du séparateur 66.

Dans ce mode de réalisation, il est également possible de prévoir un réservoir à soluté ou à solvant 67 dans la partie supérieure du récipient 61 ou bien dans la partie inférieure, le réservoir y recevant une commande propre. Ce réservoir à soluté à ouverture mécanique peut être remplacé par un réservoir fusible. Comme dans les autres modes de réalisation, le séparateur 66 détermine dans la capsule un compartiment 69 pour le réactif liquide et un compartiment 70 pour le réactif solide.

Suivant ce mode de réalisation particulier, la distribution de la boisson ou de l'aliment est obtenue par l'organe de préhension ou par un élément extérieur rapporté. De plus, comme pour les modèles précédents, le récipient et la capsule peuvent être d'une seule pièce, le fond de la capsule devenant une partie du fond du récipient.

Selon la figure 7, le conditionnement à transfert de chaleur constitue un cinquième mode de réalisation. Il comporte un récipient 70 et une capsule thermique 71 immergée dans la boisson ou l'aliment 72. Un réservoir à soluté 73 peut être placé dans la partie supérieure du récipient 70, par exemple.

La capsule 71 possède une face déformable 74 doublant le fond 75, l'une des deux faces portant une matière inflammable, l'autre faisant office de frottoir.

Selon ce mode de réalisation, on agit par pression ou par traction sur la paroi déformable 74 de la capsule 71, ce qui provoque le frottement de la face 74 sur le fond 75 de la capsule thermique 71. La chaleur ainsi produite permet le déclenchement de la réaction d'oxydo-réduction exothermique dans la capsule 71.

La distribution se fait conformément à l'un des modes décrits pour les modèles précédents.

Conformément aux figures 1 à 7, les réactions chimiques exothermiques obtenues l'intérieur de la capsule chauffante fournissent la chaleur recherchée en mettant en œuvre soit une réaction d'oxydoréduction, soit la réactivité chimique des dérivés alcalins et alcalino-terreux, par leurs propriétés d'hydratation, d'hydrolyse, et de neutralisation. L'inventeur indique ci-après les quatre groupes principaux de réactions choisis à titre d'exemple:

<u>1er groupe:</u>

Réaction de l'eau sur un oxyde d'alcalino-terreux (CaO, BaO, SrO) en présence ou non de composés tels que: halogénure métallique (NaCl, MgCl$_2$ ...) base forte (NaOH, KOH) ou d'adjuvant tel que: savon, corps gras, charbon, sucre, Polyalcool.

<u>2ème groupe:</u>

Réaction sur une base forte (Mg(OH)$_2$, NaOH ...) d'un oxyde métallique (CaO ...) d'un halogénure métallique (CaCl$_2$, MgCl$_2$ ...) d'un acide (HCl ...).

<u>3ème groupe:</u>

Réaction d'un acide (HCl) sur un oxyde d'alcalino-terreux (CaO, BaO).

L'addition en faible quantité de savon ou corps gras rend la réaction biphasique, la 1ère phase de neutralisation de l'acide étant relayée par la réaction d'hydratation.

<u>4ème groupe:</u>

Réaction d'oxydo-réduction entre un oxydant et un réducteur, à choisir parmi l'anhydride borique ou les oxydes de plomb, de fer, de manganèse, de cuivre, et d'autre part l'aluminium, le silicium ..., seuls ou en présence d'une matière inerte.

Les réactions chimiques endothermiques obtenues par mise en contact des réactifs chimiques dans la capsule thermique fournissent le froid recherché en mettant en œuvre la réactivité chimique de sels, par leurs propriétés d'hydratation et de dissolution.

L'inventeur indique ci-après les principales réactions choisies à titre d'exemple:

– réaction de l'eau sur du nitrate d'ammonium ou du nitrate de sodium.
– réaction du nitrate d'ammonium sur du carbonate de sodium cristallisé en équilibre avec une solution saturée de carbonate de sodium.
– réaction d'un acide dilué (HNO$_3$ par exemple) sur du nitrate d'ammonium et du sulfate de sodium.

Selon les figures 1 à 7, les différents types de conditionnements à transfert de chaleur sont susceptibles d'être pourvus d'un indicateur de température non représenté. Il est constitué d'un témoin placé à l'extérieur des enceintes. Ce témoin se présente sous forme d'un indicateur coloré ou d'une pochette gonflable ou d'une "séringue" renfermant un composé à point d'ébullition peu élevé tel que l'acétone ou l'éther, mélangé éventuellement à de l'eau. L'ébullition, sous l'effet d'une température d'exposition excessive, provoque une augmentation de volume réversible de la poche ou de la "séringue" de manière à rendre celle-ci visible momentanément à l'utilisateur et empêcher le déclenchement volontaire de la réaction.

## Revendications

1. Conditionnement à transfert de chaleur à usage unique pour produits alimentaires comportant:
   – un récipient fermé (2) ayant une paroi supérieure (13), un fond (5) et une paroi latérale, l'une de ces parois pouvant être déformée par pression ou par traction,
   – un produit alimentaire (3) placé dans le récipient (2),
   – une capsule fermée chauffante ou réfrigérante (4) disposée à l'intérieur du récipient (2) et au moins partiellement immergée dans le produit alimentaire (3),
   conditionnement dans lequel:
   – la partie interne de la capsule fermée (4) contient un séparateur (16) qui la subdivise en deux compartiments (17, 18) étanches contenant des réactifs chimiques différents qui, lorsqu'ils sont mélangés, produisent à l'intérieur de la capsule une réaction chimique exothermique ou endothermique qui a pour effet de modifier sa température et celle du produit alimentaire (3) elle et immergée sans ouvrir cette capsule,
   – la capsule (4) présente une paroi (9) déformable par pression ou par traction située à une certaine distance de la paroi déformable (5) du récipient (2) avec laquelle elle est susceptible de coopérer de façon telle que la déformation de la paroi (5) par pression ou par traction entraîne la déformation de la paroi (9) et,
   – le séparateur (16) coopère avec la paroi déformable (9) de la capsule (4) par l'intermédiaire d'un moyen d'accouplement de façon telle qu'une déformation de la paroi (9) entraîne une translation du séparateur (16) à l'intérieur de la capsule (4), le séparateur étant pourvu d'au moins un orifice (21) normalement fermé susceptible de s'ouvrir sous l'effet de la translation du séparateur, celui-ci provoquant au cours de sa translation l'injection à travers l'orifice (21) de l'un des réactifs chimiques provenant de l'un des compartiments (17, 18) dans l'autre compartiment (18, 17), cette mise en contact des deux réactifs chimiques déclenchant la réaction chimique.

2. Conditionnement à transfert de chaleur, selon la revendication 1, dans lequel le produit alimentaire est une boisson à préparation extemporanée par combinaison d'un solvant et d'un soluté, caractérisé en ce que la partie interne du récipient (2, 41) est subdivisée en deux zones situées à l'extérieur de la capsule (4, 43) et dont l'une contient le solvant (3, 44) et l'autre le soluté (6, 50), des moyens situés à l'intérieur du récipient (2, 41) étant sensibles à une déformation de la paroi déformable (5, 42) de celui-ci pour entraîner en réponse le mélange du solvant et du soluté.

3. Conditionnement à transfert de chaleur, selon l'une quelconque des revendications 1 et 2, caractérisé en ce que:
   – le séparateur (16, 30) est constitué par un disque portant le ou les orifices (21, 31) et séparant les deux compartiments (17, 18; 32, 33) de la capsule (4, 25) dont au moins l'un contient un réactif chimique liquide,
   – le moyen d'accouplement du disque (16, 30) et de la paroi déformable (9, 28) de la capsule (4, 25), situé à l'intérieur de cette dernière étant sensible à une déformation de cette paroi (9, 28) pour entraîner en réponse un déplacement du disque (16, 30) dans le compartiment (17, 18; 32, 33) contenant le réactif chimique liquide et l'injection à force d'un flux de ce réactif dans l'autre compartiment (18, 17; 33, 32) à travers le ou les orifices (21, 31).

4. Conditionnement à transfert de chaleur, selon l'une quelconque des revendications 1 à 3, caractérisé en ce qu'il comporte des organes de maintien (10, 14, 34) de la capsule thermique (4, 25) à l'intérieur du récipient fermé (2, 24) à une certaine distance des parois de celui-ci, une partie du produit alimentaire (3, 29) placé dans le récipient se trouvant entre les parois déformables (5, 9, 27, 28) de celui-ci et de la capsule.

5. Conditionnement à transfert de chaleur, selon l'une quelconque des revendications 1 à 4, caractérisé en ce que la capsule thermique (4, 25) est totalement immergée à l'intérieur du produit alimentaire (3, 29).

6. Conditionnement à transfert de chaleur, selon l'une quelconque des revendications 1 à 5, caractérisé en ce que la paroi déformable (5) du récipient (2) est son fond et en ce que la paroi supérieure (13) du récipient (2) est pourvue d'un organe de distribution (22) du produit alimentaire (3).

7. Conditionnement à transfert de chaleur, selon l'une quelconque des revendications 1 à 6, caractérisé en ce qu'il comporte une tige (64) permettant l'accouplement de la paroi déformable (65) de la capsule thermique (63) et de la paroi déformable (62) du récipient (61), cette tige (64) étant située entre ces parois à l'intérieur du récipient (61) et étant reliée à un organe de préhension permettant d'exercer un mouvement de traction.

8. Conditionnement à transfert de chaleur, selon l'une quelconque des revendications 1 à 7, caractérisé en ce que le réactif liquide est contenu dans une poche reposant sur le disque séparateur non étanche (16, 30).

9. Conditionnement à transfert de chaleur, selon l'une quelconque des revendications 1 à 8, caractérisé en ce que le récipient (41) est pourvu d'un poussoir (46) coopérant avec une came (49) pour déformer la capsule (43) et ouvrir le réservoir (50).

## Claims

1. Packaging with heat transfer means to be used only once for alimentary products comprising:
   – a closed container (2) having an upper wall (13), a base (5) and a side wall, one of these walls being deformable by pressure or by traction;
   – an alimentary product (3) placed in the container (2);
   – a closed heating or refrigerating capsule (4) disposed inside the container (2) and at least partially immersed in the alimentary product (3);
   packaging in which:
   – the internal section of the closed capsule (4) contains a separator (16) which divides the latter into two sealed compartments (17, 18) containing different chemical reagents which, when they are mixed, produce an exothermic or endothermic chemical reaction inside the capsule, the effect of which is to modify its temperature and that of the alimentary product (3) in which it is immersed without this capsule being opened;
– the capsule (4) comprises a wall (9) which can be deformed by pressure or by traction, located at a given distance from the deformable wall (5) of the container (2) with which it is capable of co-operating in such a way that the deformation of the wall (5) by pressure or by traction results in a deformation of the wall (9); and
– the separator (16) co-operates with the deformable wall (9) of the capsule (4) by a coupling means in such a way that a deformation of the wall (9) results in a displacement of the separator (16) inside the capsule (4), the separator being provided with at least one aperture (12) normally closed and capable of opening under the effect of the separator displacement, the latter causing, during its displacement, one of the chemical reagents from one of the compartments (17, 18) to be injected through the aperture (21) into the other compartment (18, 17), the chemical reaction being triggered by the two chemical reagents being brought into contact.

2. Packaging with heat transfer means, according to Claim 1, in which the alimentary product is a drink prepared extemporaneously by the combination of a solvent and a solute, characterised in that the internal section of the container (2, 41) is subdivided into two areas located outside the capsule (4, 43), one of which containing the solvent (3, 44) and the other containing the solute (6, 50), means located inside the container (2, 41) being sensitive to a deformation of the deformable wall (5, 42) thereof to result in the mixing of the solvent and the solute in response.

3. Packaging with heat transfer means, according to either of Claims 1 or 2, characterised in that:
– the separator (16, 30) consists of a disc comprising the aperture or apertures (21, 31) and separating the two compartments (17, 18; 32, 33) of the capsule (4, 25), of which at least one contains a liquid chemical reagent;
– the means for coupling the disc (16, 30) and the deformable wall (9, 28) of the capsule (4, 25), located inside the latter being sensitive to a deformation of this wall (9, 28) to cause in response a displacement of the disc (16, 30) in the compartment (17, 18; 32, 33) containing the liquid chemical reagent and the forced injection of a stream of this reagent into the other compartment (18, 17; 33, 32) through the aperture or apertures (21, 31).

4. Packaging with heat transfer means, according to any one of Claims 1 to 3, characterised in that it comprises retaining members (10, 14, 34) for the thermal capsule (4, 25) inside the closed container (2, 24) at a given distance from the walls thereof, one part of the alimentary product (3, 29) placed inside the container being located between the deformable wall (5, 9, 27, 28) thereof and of the capsule.

5. Packaging with heat transfer means, according to any one of Claims 1 to 4, characterised in that the thermal capsule (4, 25) is totally immersed inside the alimentary product (3, 29).

6. Packaging with heat transfer means, according to any one of Claims 1 to 5, characterised in that the deformable wall (5) of the container (2) is the base thereof; and in that the upper wall (13) of the container (2) is provided with a distribution member (22) for the alimentary product (3).

7. Packaging with heat transfer means, according to any one of Claims 1 to 6, characterised in that it comprises a rod (64) enabling the deformable wall (65) of the thermal capsule (63) to be coupled to the deformable wall (62) of the container (61), this rod (64) being located between these walls inside the container (61) and being connected to a gripping member enabling a traction movement to be performed.

8. Packaging with heat transfer means, according to any one of Claims 1 to 7, characterised in that the liquid reagent is contained in a pocket resting on the separating disc (16, 30) which is not leak-tight.

9. Packaging with heat transfer means, according to any one of Claims 1 to 8, characterised in that the container (41) is provided with a pushing device (46) co-operating with a cam (49) for deforming the capsule (43) and opening the reservoir (50).

**Patentansprüche**

1. Wärmeübertragungseinrichtung zum Gebrauch für Nahrungsmittelerzeugnisse, umfassend
– einen geschlossenen Behälter (2), der eine obere Wandung (13), einen Boden (5) und eine Seitenwandung hat, wobei eine dieser Wandungen durch Druck oder Zug verformbar ist,
– ein in dem Behälter (2) angeordnetes Nahrungsmittelerzeugnis (3),
– eine geschlossene Kapsel, wärmend oder kühlend (4), die im Inneren des Behälters (2) angeordnet ist und zumindest teilweise in dem Nahrungsmittelerzeugnis (3) versenkt ist,
eine Einrichtung, bei der
– das Innenteil der geschlossenen Kapsel (4) einen Separator (16) enthält, der dieses in zwei Teile (17, 18) unterteilt, die wasserdicht sind, verschiedene chemische Reagenzen enthaltend, die, sobald sie vermischt werden, im Innern der Kapsel eine exotherme oder endotherme Reaktion erzeugen, die bewirkt, daß deren Temperatur und die des Nahrungsmittelerzeugnisses (3) änderbar ist, in dem sie ohne Öffnen der Kapsel versenkt ist,
– die Kapsel (4) eine durch Druck oder Zug verformbare Wandung (9) aufweist, die sich im Abstand zur verformbaren Wand (5) des Behälters (2) befindet, mit der sie geeignet ist, derart zusammenzuwirken, daß die Verformung der Wand (5) durch Druck oder Zug die Verformung der Wandung (9) nach sich zieht, und
– der Separator (16) mit der verformbaren Wandung (9) der Kapsel (4) mittels eines Kupplungsmittels derart zusammenwirkt, daß eine Verformung der Wandung (9) eine Verschiebung des Separators (16) in das Innere der Kapsel (4) nach sich zieht, wobei der Separator mit wenigstens einer normalerweise geschlossenen Öffnung (21) versehen ist, die sich unter der Wirkung der Verschiebung des Separators öffnen kann, was im Verlauf dieser Verschiebung eine Injizierung quer durch die Öffnung (21) eines der chemischen Reagenzen, das von einem der Teile (17, 18) herstammt, in das andere Teil (18, 17) bewirkt, wodurch durch dieses Inkontaktbringen der beiden chemischen Reagenzen die chemische Wirkung auslösbar ist.

2. Wärmeübertragungseinrichtung nach Anspruch 1, wobei das Nahrungsmittelerzeugnis ein Getränk für die sofortige Herstellung und Verabreichung in Verbindung mit einem Lösungsmittel und einer Lösung ist, dadurch gekennzeichnet, daß das Innenteil des Behälters (2, 41) in zwei Zonen unterteilt ist, die sich außerhalb der Kapsel (4, 43) befinden, und von denen die eine das Lösungsmittel (3, 44) und die andere die Lösung (6, 50) enthält, und daß sich Mittel im Innern des Behälters (2, 41) befinden, die auf eine Verformung der verformbaren Wand desselben (5, 42) reagieren, um in Erwiderung darauf die Mischung des Lösungsmittels und der Lösung in Bewegung zu bringen.

3. Wärmeübertragungseinrichtung gemäß irgendeinem der Ansprüche 1 und 2, dadurch gekennzeichnet, daß

— der Separator (16, 30) aus einer Scheibe besteht, die zumindest eine Öffnung (21, 31) aufweist und die beiden Teile (17, 18; 32, 33) der Kapsel (4, 25) trennt, von denen wenigstens eines ein flüssiges chemisches Reagenz enthält,

— das Kupplungsmittel der Scheibe (16, 30) und der verformbaren Wand (9, 28) der Kapsel (4, 25) sich im Inneren dieser letzteren befindet und auf eine Verformung dieser Wand (9, 28) anspricht, um daraufhin eine Verschiebung der Scheibe (16, 30) in das Teil (17, 18; 32, 33) zur Folge zu haben, und zwar in das Teil (17, 18; 32, 33), das das flüssige chemische Reagenz enthält, sowie einer Injizierung einer Strömung des Reagenzmittels in das andere Teil (18, 17; 33, 32) quer durch die Öffnung (21, 31).

4. Wärmeübertragungseinrichtung gemäß irgendeinem der Ansprüche 1–3, dadurch gekennzeichnet, daß die Einrichtung Aufrechterhaltungsorgane (10, 14, 34) der Wärmekapsel (4, 25) im Innern des geschlossenen Behälters (2, 24) in einer gewissen Entfernung zu den Wänden dieses Behälters enthält, wobei sich ein Teil des Nahrungsmittelerzeugnisses (3, 29), das in den Behälter gelegt wurde, sich zwischen den verformbaren Wänden (5, 9, 27, 28) desselben und der Kapsel befindet.

5. Wärmeübertragungseinrichtung gemäß irgendeinem der Ansprüche 1 bis 4, dadurch gekennzeichnet, daß die Wärmekapsel (4, 25) vollkommen im Innern des Nahrungsmittelerzeugnisses (3, 29) versenkt ist.

6. Wärmeübertragungseinrichtung gemäß irgendeinem der Ansprüche 1 bis 5, dadurch gekennzeichnet, daß die verformbare Wandung (5) des Behälters (2) dessen Boden ist, und daß die obere Wand (13) des Behälters (2) mit einem Verteilungsorgan (22) des Nahrungsmittelerzeugnisses (3) versehen ist.

7. Wärmeübertragungseinrichtung gemäß irgendeinem der Ansprüche 1 bis 6, dadurch gekennzeichnet, daß die Einrichtung ein Stangenelement (64) enthält, das die Kupplung der verformbaren Wand (65) der Wärmekapsel (63) und der verformbaren Wand (62) des Behälters (61) ermöglicht, und daß das Stangenelement (64) sich zwischen diesen Wänden im Inneren des Behälters (61) befindet und mit einer Handhabe verbunden ist, die es ermöglicht, eine Zugbewegung auszuführen.

8. Wärmeübertragungseinrichtung gemäß irgendeinem der Ansprüche 1 bis 7, dadurch gekennzeichnet, daß das flüssige Reagenz in einer Tasche enthalten ist, die auf der nicht dichten Separatorscheibe (16, 30) ruht.

9. Wärmeübertragungseinrichtung gemäß irgendeinem der Ansprüche 1 bis 8, dadurch gekennzeichnet, daß der Behälter (41) mit einem Drücker (46) versehen ist, der zum Verformen der Kapsel und zum Öffnen des Behälters (50) mit einem Nocken (49) zusammenwirkt.

Fig.1

Fig.2

Fig.3

Fig.4

Fig.5

**Fig.6**

**Fig.7**